# EUROPÄISCHE PATENTSCHRIFT

(11) **EP 1 372 928 B1**
(45) Veröffentlichungstag und Bekanntmachung des Hinweises auf die Patenterteilung: **06.10.2004**
(21) Anmeldenummer: 02730020.1
(22) Anmeldetag: 16.03.2002
(51) Int. Cl.: B29C 45/16, B29C 37/00

(54) **VERFAHREN ZUR HERSTELLUNG EINES MEHRKOMPONENTEN-SPRITZGIESSTEILS, WOBEI MINDESTENS EINE DER KOMPONENTEN MIT EINER BESCHICHTUNG VERSEHEN IST**
METHOD FOR PRODUCING A MULTI-COMPONENT INJECTION-MOULDED PART, WHEREBY AT LEAST ONE OF THE COMPONENTS IS PROVIDED WITH A COATING
PROCEDE DE PRODUCTION D'UNE PIECE MOULEE PAR INJECTION COMPRENANT PLUSIEURS CONSTITUANTS, AU MOINS UN DES CONSTITUANTS ETANT POURVU D'UN REVETEMENT

(30) Priorität: 03.04.2001 DE 10116522
(43) Veröffentlichungstag der Anmeldung: 02.01.2004
(73) Patentinhaber: Braun GmbH, 61476 Kronberg (DE)
(72) Erfinder: BOLAND, Bernhard, 60385 Frankfurt (DE); GARDLO, Götz, 65843 Sulzbach (DE); HANS, Rainer, 65529 Waldems (DE); REICK, Hansjörg, 61449 Steinbach (DE); SCHWARZ-HARTMANN, Armin, 55234 Wendelsheim (DE)
(74) Vertreter: Vorbeck, Wolfgang, Dr.
(86) Internationale Anmeldenummer: PCT/EP2002/002933
(87) Internationale Veröffentlichungsnummer: WO 2002/081171

(56) Entgegenhaltungen:
- EP-A- 1 022 116
- EP-A- 1 048 748
- DE-A- 19 546 685
- DE-A- 19 907 245

## Beschreibung

Die Erfindung betrifft ein Verfahren zur Herstellung eines Kunststoffteils, z. B. Spritzgießteil, bestehend aus wenigstens einer ersten Komponente und einer mit dieser verbundenen zweiten Komponente aus jeweils gegebenenfalls unterschiedlichen Kunststoffen, wobei jedenfalls die erste Komponente eine Beschichtung einer Oberfläche aufweist. Die zweite Komponente kann eine Beschichtung einer Oberfläche aufweisen oder nicht aufweisen, wobei im erstgenannten Fall die Beschichtung bevorzugt unterschiedlich zur Beschichtung der ersten Komponente, gegebenenfalls aber auch identisch mit dieser ist.

Heutzutage werden immer häufiger Mehrkomponenten-Spritzgießteile, beispielsweise für Gehäuse oder sonstige Teile von elektrischen Zahnbürsten, elektrischen oder mechanischen Rasierapparaten, kleinen Haushaltsgeräten, Blutdruckmessern, Fieberthermometern oder dergleichen eingesetzt, wobei beispielsweise eine der Komponenten aus einem harten und die andere Komponente aus einem weichen Kunststoff besteht. Die Komponente bestehend aus weichem Kunststoff kann beispielsweise eine Membran am Gehäuse des harten Kunststoffs bilden und zur Betätigung eines im Gehäuse untergebrachten Schalters dienen oder als Grifffläche an einem Hartkunststoffteil ausgebildet sein. Auch können derartige Weichkomponenten zur Verbesserung der Handhabung oder Griffigkeit einem harten Kunststoffgehäuse angespritzt werden. Die Erfindung beschränkt sich jedoch nicht auf derartige Hart-Weich-Kunststoffgehäuse, sondern findet auch bei jedem Kunststoffteil, wie z. B. Mehrkomponenten-Spritzgießteil Anwendung, bei dem wenigstens zwei Komponenten aus einem unterschiedlichen, gegebenenfalls auch gleichen Kunststoff bestehen und eine der Komponenten mit einer Beschichtung versehen ist. So sind beispielsweise auch Kombinationen von Hart-Hart-Kunststoff oder Weich-Weich-Kunststoff denkbar. Auch muß es sich nicht um Gehäuse oder dergleichen handeln, ebenso können kompakte Körper als Mehrkomponenten-Spritzgießteile im Rahmen der vorliegenden Erfindung zur Anwendung gelangen. Sofern eine dieser Komponenten mit einer Beschichtung versehen werden soll, ist es in der Regel schwierig, sofern die Beschichtung vor dem Anspritzen der zweiten Komponente angebracht wird, eine innige Verbindung zwischen der ersten und der zweiten Komponente während des Spritzgießvorganges herbeizuführen. Derartige Probleme können beispielsweise dann auftreten, wenn die erste Komponente, bestehend beispielsweise aus Hart-Kunststoff, mit einer metallischen Beschichtung der Oberfläche versehen werden soll, wobei dann des weiteren eine zweite Komponente, z. B. Weich-Kunststoff der ersten Komponente mittels Spritzgießens angeformt werden soll, so daß eine dauerhafte Verbindung zwischen der ersten Komponente und der zweiten Komponente entsteht. Die metallische Schicht verhindert im allgemeinen eine innige Verbindung zwischen der beschichteten ersten Komponente und der zweiten Komponente, so daß die zweite Komponente nicht dauerhaft an der ersten Komponente haften kann. Zwar besteht die Möglichkeit, die Verbindungsstellen zwischen erster Komponente und zweiter Komponente während des Beschichtens der ersten Komponente beispielsweise mechanisch abzudecken, um dann mittels des Spritzgießens die zweite Komponente mit dem abgedeckten und damit unbeschichteten Bereich der ersten Komponente dauerhaft zu verbinden, doch stellen sich hierbei in der Regel Oberflächenfehler an den Übergangsstellen zwischen der beschichteten ersten Komponente und der nicht beschichteten zweiten Komponente ein.

Das Dokument EP-A2-1048748 offenbart ein Verfahren zur Herstellung eines partiell galvanisierbaren Polymerformteils nach dem Zweikomponentenverfahren, wobei zunächst in einer ersten Kavität einer Spritzgiessmaschine ein Vorformteil aus einem galvanisierbaren bzw. nicht galvanisierbaren Polymeren geformt wird. Danach wird in einer zweiten, das Vorformteil aufnehmenden Kavität der Spritzgiessmaschine ein Zusatzformteil aus einem nicht galvanisierbaren bzw. galvanisierbaren Polymeren geformt. Schliesslich werden die Oberflächen des galvanisierbaren Polymeren galvanisiert. Bei diesem Verfahren entfallen Schutzbehandlungen, Abdeckungen und Entfernung von Schichten für den nicht zu galvanisierenden Bereich.

Das Dokument DE-A1-19546685, welches als nächstkommender Stand der Technik für den Gegenstand des Anspruchs 1 angesehen wird, offenbart ein Verfahren zur Herstellung von an ihrer Oberfläche teilbehandelten Kunststoffteilen, wobei zwei sich nicht verbindende Kunststoffe nach dem Zweikomponentenverfahren zu einem ersten Spritzgussteil aneinandergespritzt werden. Danach wird die Oberfläche des Spritzgussteils über zumindest Teilbereiche der Oberflächen der zwei sich nicht verbindenden Kunststoffe behandelt. Schliesslich werden die beiden Kunststoffe getrennt, um das aus einem einzigen Kunststoff bestehende Formteil mit unterschiedlich behandelten Oberflächen zu erhalten. Das abgetrennte Teil wird recycelt.

Demgegenüber liegt der vorliegenden Erfindung die Aufgabe zugrunde, ein Verfahren der eingangs genannten Art bereitzustellen, bei dem eine innige Verbindung zwischen der ersten, mit einer Beschichtung versehenen Komponente und der zweiten Komponente mittels Spritzgießens gewährleistet ist, wobei Oberflächenfehler an den Übergangsstellen sicher vermieden sind.

Diese Erfindung wird bei dem Verfahren der eingangs genannten Art im wesentlichen durch folgende Schritte gelöst:

Das Spritzgießteil wird in einer ersten Spritzgießform, insbesondere Mehrkomponenten-Spritzgießform, durch Spritzgießen hergestellt, wobei die Verbindung zwischen der ersten Komponente und einer zweiten Vorkomponente nicht dauerhaft, insbesondere nur leicht haftend, eingestellt ist;
eine Oberfläche der ersten Komponente und gegebenenfalls der Vorkomponente des Spritzgießteils wird mit der Beschichtung versehen;
die zweite Vorkomponente wird von der ersten Komponente getrennt und entfernt;
die zweite Komponente wird in einer zweiten Spritzgießform, insbesondere Mehrkomponenten-Spritzgießform, durch Spritzgießen dauerhaft mit der ersten Komponente verbunden.

Aufgrund dieser Maßnahmen wird eine innige Verbindung zwischen der ersten, mit einer Beschichtung versehenen Komponente und der zweiten Komponente erreicht, wobei Oberflächenfehler an den Übergangsstellen nicht auftreten. Insoweit dient die zweite Vörkompontente, die vor Aufbringen der Beschichtung der ersten Komponente nicht dauerhaft mit der ersten Komponente mittels Spritzgießens verbunden wird, als Abdeckung für solche Bereiche der ersten Komponente, die beim endgültigen Anspritzen der zweiten Komponente mit dieser in Kontakt treten und eine Verbindung eingehen. Dadurch, daß die Abdeckung der ersten Komponente nicht einfach mechanisch oder dergleichen aufgelegt wird, sondern praktisch wie die endgültige zweite Komponente der ersten Komponente zunächst angespritzt wird, sind die mit der zweiten Komponente in Kontakt kommenden Flächen der ersten Komponente während des Beschichtungsvorganges der ersten Komponente sicher abgedeckt, so daß nach dem anschließenden Entfernen der zweiten Vorkomponente von der ersten, bereits mit der Beschichtung versehenen Komponente die Kontaktbereiche zwischen der ersten Komponente und der zweiten Komponente frei von der Beschichtung sind und die zweite Komponente dauerhaft der ersten Komponente angespritzt werden kann, wobei Oberflächenfehler und dergleichen nicht auftreten.

Nach einer ersten vorteilhaften Ausgestaltung der Erfindung weist die Beschichtung eine Metallisierung auf bzw. ist durch eine Metallisierung gebildet, die insbesondere galvanisch, chemisch-physikalisch oder mittels Lacken oder Farben oder dergleichen einer Oberfläche, beispielsweise der ersten Komponente aufgebracht ist. Durch Aufbringen einer metallischen Beschichtung auf die Kunststoff-Komponente kann dem Kunststoffteil ein hochwertiges Aussehen verliehen werden, wobei jedenfalls bei Mehrkomponenten-Spritzgießteilen Oberflächenfehler an den Übergangsstellen der einzelnen Komponenten sicher vermieden sind.

Dabei bietet es sich an, daß die zweite Vorkomponente und die zweite Komponente hinsichtlich der geometrischen Abmessungen, wie Dicke, Form, Kontur und dergleichen, im wesentlichen identisch sind. Durch diese Maßnahme wird einerseits gewährleistet, daß die Kontaktbereiche der ersten und zweiten Vorkomponente sicher während des Beschichtungsvorganges abgedeckt sind und beim Anbringen der zweiten Komponente diese Bereiche eine innige Verbindung miteinander eingehen, wobei Oberflächenfehler oder auch Undichtigkeiten oder dergleichen vermieden sind.

Insoweit bietet es sich ebenfalls an, daß die erste und die zweite Spritzgießform identisch oder unter Berücksichtigung der Dicke der auf die erste Komponente aufgebrachten Beschichtung im wesentlichen identisch sind. Sofern die Dicke der ersten Beschichtung ausreichend dünn ausgebildet ist, können die zweite Vorkomponente, wie auch die zweite Komponente nach Beschichten der ersten Komponente und Entfernen der zweiten Vorkomponente in ein und denselben bevorzugt als Mehrkomponenten-Spritzgießform ausgebildeten Werkzeug der ersten Komponente mittels Spritzgießen angeformt werden. Überschreitet die Dikke der Beschichtung jedoch ein gewisses Maß, so ist gegebenenfalls auch ein zweites Spritzgießwerkzeug zum Anspritzen der zweiten Komponente an der ersten, beschichteten Komponente erforderlich.

Eine andere Ausgestaltung des erfindungsgemäßen Verfahrens besteht auch darin, daß die zweite Vorkomponente und die zweite Komponente hinsichtlich der geometrischen Abmessungen, wie Dicke, Form, Kontur oder dergleichen, unterschiedlich ausgebildet sind. Insoweit kann es sich beispielsweise anbieten, die zweite Vorkomponente ausschließlich als Schicht zur Beschichtung der späteren Kontaktbereiche der ersten Komponente mit der zweiten Komponente auszubilden, wobei diese Schicht im Gegensatz zu herkömmlichen Verfahren der ersten Komponente während des Beschichtungsvorganges nicht aufgelegt, sondern mittels eines Spritzgußvorganges angeformt ist. Weiterhin besteht der Vorteil, daß aufgrund dieser Maßnahme unter Umständen Material zur Herstellung der zweiten Vorkomponente eingespart wird, welche lediglich in einem Zwischenschritt der ersten Komponente angeformt und nach dem Beschichten der ersten Komponente wieder von dieser entfernt wird. Es ist also nicht erforderlich, daß die zweite Vorkomponente sämtliche Volumina ausfüllt, die später von der zweiten Komponente eingenommen werden, vielmehr ist Aufgabe der zweiten Vorkomponente lediglich, die späteren Kontaktbereiche zwischen erster Komponente und zweiter Komponente während des Beschichtungsvorganges abzudecken.

Insoweit bietet es sich an, daß im Falle der unterschiedlichen geometrischen Ausbildung von zweiter Vorkomponente sowie zweiter Komponente die erste und zweite Spritzgußform korrrespondierend unterschiedlich ausgebildet sind.

Eine weitere vorteilhafte Ausgestaltung des erfindungsgemäßen Verfahrens besteht darin, daß die zweite Komponente beispielsweise mechanisch von der ersten Komponente getrennt und/oder chemisch angelöst und/oder chemisch aufgelöst wird.

Schließlich hat es sich in verschiedenen Anwendungsfällen als vorteilhaft erwiesen, daß der Kunststoff zur Bildung der zweiten Vorkomponente unterschiedliche Eigenschaften im Vergleich zum Kunststoff zur Bildung der zweiten Komponente aufweist. Beispielsweise können durch die Auswahl verschiedener Kunststofftypen die Hafteigenschaften der zweiten Vorkomponente bzw. zweiten Komponente an der ersten Komponente entsprechend eingestellt werden, wobei für eine nur leichte Haftung der zweiten Vorkomponente und eine sehr innige und dauerhafte Haftung der zweiten Komponente an der ersten Komponente gesorgt werden kann.

Es versteht sich, daß die zur Anwendung gelangenden Spritzgießformen entsprechend den individuellen Bedürfnissen des herzustellenden Mehrkomponenten-Spritzgießteils ausgebildet sein können. Dabei kommen zwei Komponenten-Spritzgießwerkzeuge oder sonstige Spritzgießwerkzeuge je nach herzustellendem Spritzgießteil zur Anwendung, wie sie aus dem Stand der Technik bekannt sind. Hinsichtlich der verwendeten Kunststoffe bezüglich der ersten Komponente, der zweiten Vorkomponente bzw. zweiten Komponente sind mannigfaltige Variationen möglich. Es können die Kunststoffkombinationen Hart/Hart, Hart/Weich, Weich/Weich beispielsweise zur Anwendung gelangen, wobei als Hartkunststoff beispielsweise ASA, ABS oder dergleichen, und als Weichkunststoff beispielsweise TPE, z. B. Desmopan (Marke), zum Einsatz gelangen können. Die Beschichtung kann auf der äußeren Oberfläche und/oder auch einer inneren Oberfläche der ersten Komponente des Spritzgießteils angeordnet sein. Letzteres ist insbesondere dann der Fall, wenn die erste Komponente die Form eines Gehäuses aufweist. Die individuelle Auswahl und Anpassung der zum Einsatz gelangenden Kunststoffe für die erste Komponente, die zweite Vorkomponente sowie die zweite Komponente ist jedoch im wesentlichen durch die Anforderungen an und die Ausbildung des jeweiligen Mehrkomponenten-Spritzgießteils bedingt und kann von dem zuständigen Kunststoff-Fachmann durchgeführt werden. Auch das Aufbringen der Beschichtung auf die erste Komponente kann vielfältig erfolgen, beispielsweise durch ein galvanisches Bad, mittels Lack oder Farbe durch Tauchen, Sprayen oder dergleichen Verfahren.

Grundsätzlich ist auch ein zu dem beschriebenen Verfahren alternatives Verfahren denkbar. Dieses Verfahren zur Herstellung eines Kunststoffteils, insbesondere Spritzgießteils, bestehend wenigstens aus einer ersten Komponente und mit dieser verbundenen zweiten Komponente aus jeweils gegebenenfalls unterschiedlichen Kunststoffen, wobei die erste Komponente eine Beschichtung einer Oberfläche und die zweite Komponente eine Beschichtung aufweist oder auch nicht aufweist, wobei für den Fall, daß die zweite Komponente eine Beschichtung aufweist, diese bevorzugt unterschiedlich zu der Beschichtung der ersten Komponente ist, zeichnet sich durch folgende Schritte aus:

Das Kunststoffteil, insbesondere Spritzgießteil, wird in einer ersten Form, insbesondere Spritzgießform, insbesondere Mehrkomponenten-Spritzgießform, durch Formen, insbesondere Spritzgießen, hergestellt, wobei die Verbindung zwischen der ersten Komponente und einer zweiten Vorkomponente dauerhaft eingestellt ist. Eine Oberfläche der ersten Komponente und/oder zweiten Vorkomponente des Kunststöffteils, insbesondere Spritzgießteils, wird mit der Beschichtung versehen, die zweite Vorkomponente wird in einer zweiten Form, insbesondere Spritzgießform, insbesondere Mehrkomponenten-Spritzgießform, durch Formen, insbesondere Spritzgießen, mit einer zweiten Komponente überspritzt, wobei die zweite Komponente dauerhaft mit der ersten Komponente und/oder der Vorkomponente verbunden ist. In diesem Fall wird die durch die Beschichtung gegebenenfalls beschädigte zweite Vorkomponente mittels der zweiten Komponente überspritzt, wobei die zweite Komponente dauerhaft mit der zweiten Vorkomponente sowie gegebenenfalls der ersten Komponente dauerhaft verbunden ist, so daß auch nach diesem Verfahren eine ästethisch ansprechende Oberfläche des Kunststoffteils erzielt wird. Bei diesem Verfahren versteht es sich, daß die zweite Vorkomponente und die zweite Komponente hinsichtlich der geometrischen Abmessungen, wie Dicke, Form, Kontur oder dergleichen unterschiedlich ausgebildet sind und auch die erste Form zum Formen von erster Komponente und zweiter Vorkomponente unterschiedlich zu der zweiten Form zum Anspritzen der zweiten Komponente ausgebildet sind. Dieses Verfahren kann ansonsten die bevorzugten Ausführungsformen des oben beschriebenen ersten Verfahrens aufweisen und stellt eine alternative Verfahrensweise zu der bevorzugten Ausführungsform des ersten Verfahrens dar.

Weitere Merkmale, Vorteile, Anwendungsmöglichkeiten und Ausgestaltungen der Erfindung ergeben sich aus der nachfolgenden Beschreibung der Ausführungsbeispiele anhand der Figuren. Dabei bilden alle beschriebenen und/oder bildlich dargestellten Merkmale für sich oder in beliebiger, sinnvoller Kombination den Gegenstand vorliegender Erfindung, auch unabhängig von ihrer Zusammenfassung in den Ansprüchen oder deren Rückbeziehung.

Es zeigen:
- Fig. 1a-d: ein erstes Ausführungsbeispiel eines erfindungsgemäßen Verfahrens in schematischer Darstellung anhand eines kubusförmigen, massiven Mehrkomponenten-Spritzgießteils,
- Fig. 2a-d: eine zweite Ausführungsform des erfindungsgemäßen Verfahrens in schematischer Darstellung anhand eines rohrförmigen, gehäuseartigen Mehrkomponenten-Spritzgießteils und
- Fig. 3a-e: in schematischer Darstellung die einzelnen Schritte eines Ausführungsbeispiels des erfindungsgemäßen Verfahrens anhand Schnittdarstellungen durch die Wandung eines gehäuseartigen Mehrkomponenten-Spritzgießteils.

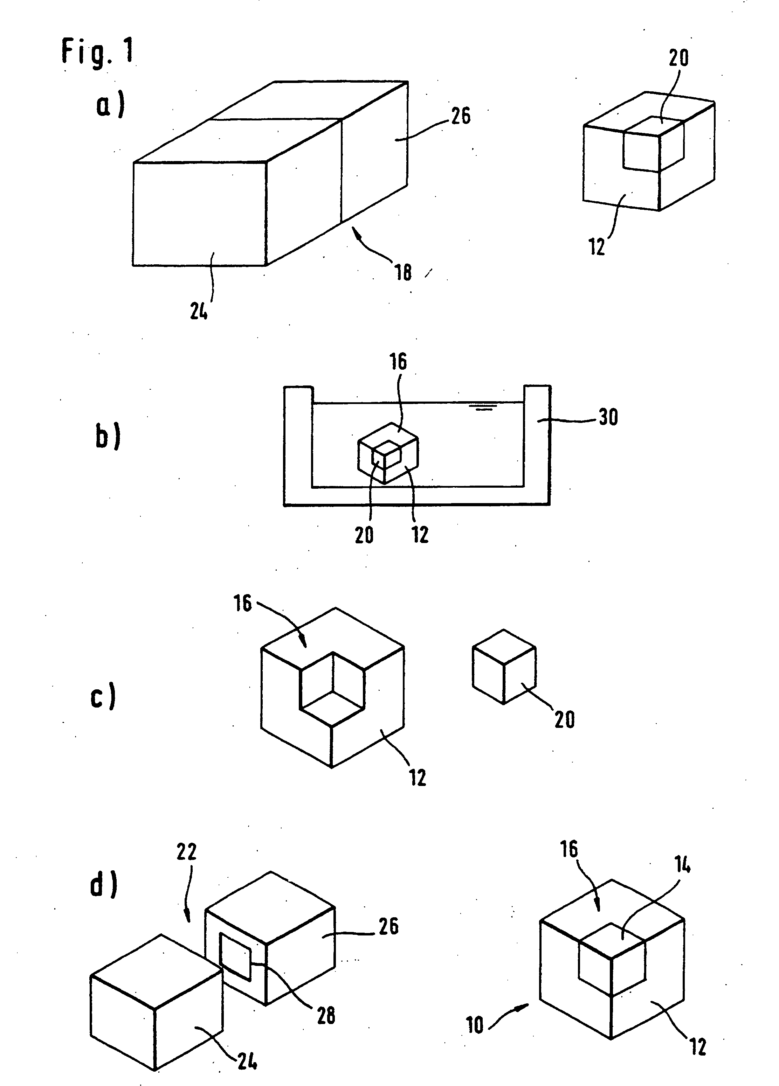

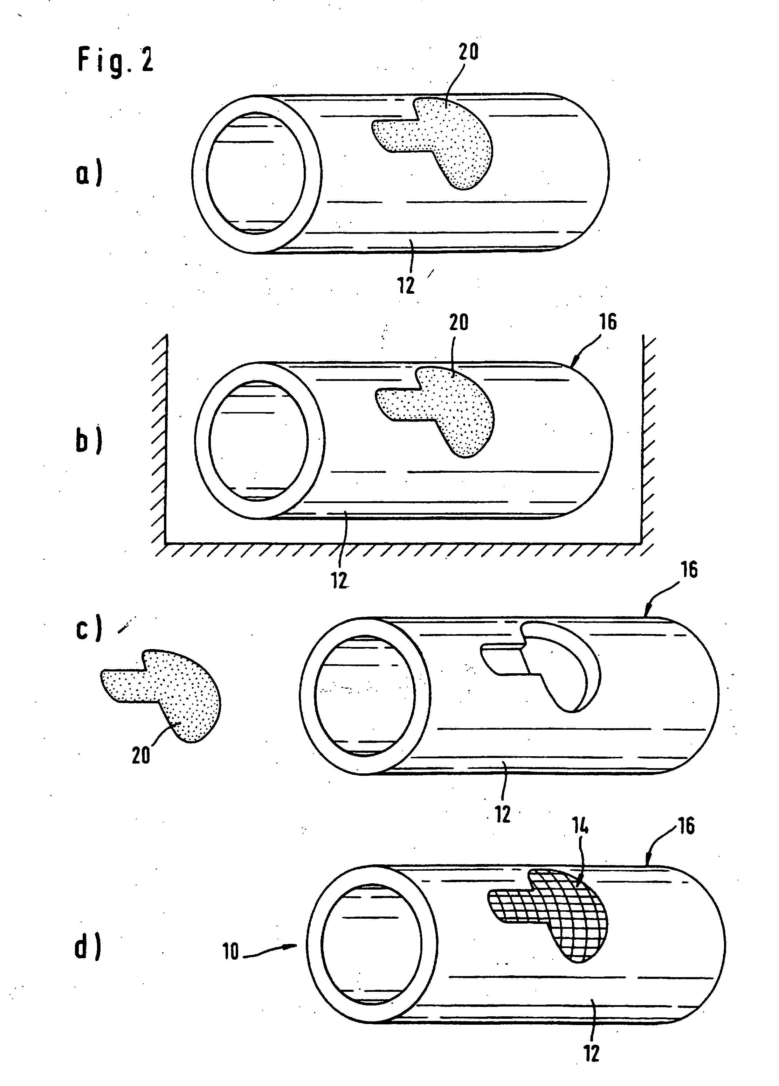

Anhand der Fig. 1 und 2 werden zwei Ausführungsbeispiele des erfindungsgemäßen Verfahrens erläutert. Dieses Verfahren zur Herstellung von einem Spritzgießteil 10 zeichnet sich dadurch aus, daß das Spritzgießteil 10 als Mehrkomponenten-Spritzgießteil wenigstens aus einer ersten Komponente 12 und einer mit dieser verbundenen zweiten Komponente 14 besteht. Die beiden Komponenten 12, 14 sind aus jeweils gleichen oder unterschiedlichen Kunststoffen gebildet, wobei die erste Komponente 12 eine Beschichtung 16 einer Oberfläche sowie gegebenenfalls auch bei gehäuseartig ausgebildeten Spritzgießteilen einer Unterfläche oder einer Innenfläche aufweist. Die zweite Komponente 14 ist jedenfalls nicht mit dieser Beschichtung 16 der ersten Komponente 12 versehen, kann jedoch gegebenenfalls eine andersartige Beschichtung aufweisen.

Gemäß den Fig. 1a, 2a wird das Spritzgießteil 10 in einer ersten Spritzgießform 18, bestehend aus beispielsweise einer ersten und zweiten Formhälfte 24, 26 mit entsprechenden Kavitäten 28 durch Spritzgießen hergestellt, wobei die Verbindung zwischen der ersten Komponente 12 und einer zweiten Vorkomponente 20 nicht dauerhaft, insbesondere nur leicht haftend, eingestellt ist.

Gemäß den Fig. 1a, 2b wird das Spritzgießteil 10 bestehend aus erster Komponente 12 und zweiter Vorkomponente 20 in einer Beschichtungsvorrichtung, beispielsweise einem galvanischen Bad, einer Lackierungsvorrichtung oder dergleichen, an der Oberfläche (Fig. 1b) bzw. an der Oberfläche und der Unterfläche (Fig. 2b) mit einer Beschichtung 16 versehen. Diese Beschichtung 16 kann sich gegebenenfalls auch auf der zweiten Vorkomponente 20 ausbilden, was von dem Material dieser zweiten Vorkomponente 20 abhängen kann.

Gemäß den Fig. 1c, 2c wird die zweite Vorkomponente 20 von der ersten Komponente 12 getrennt und entfernt. Dabei sind die Kontaktbereiche zwischen der zweiten Vorkomponente 20 und der ersten Komponente 12 frei von der Beschichtung 16, da die zweite Vorkomponente 20 als Abdeckung für diese Kontaktbereiche dient.

Gemäß Fig. 1d, 2d wird die zweite Komponente 14 in einer zweiten Spritzgießform 22 durch Spritzgießen dauerhaft mit der ersten Komponente 12 verbunden.

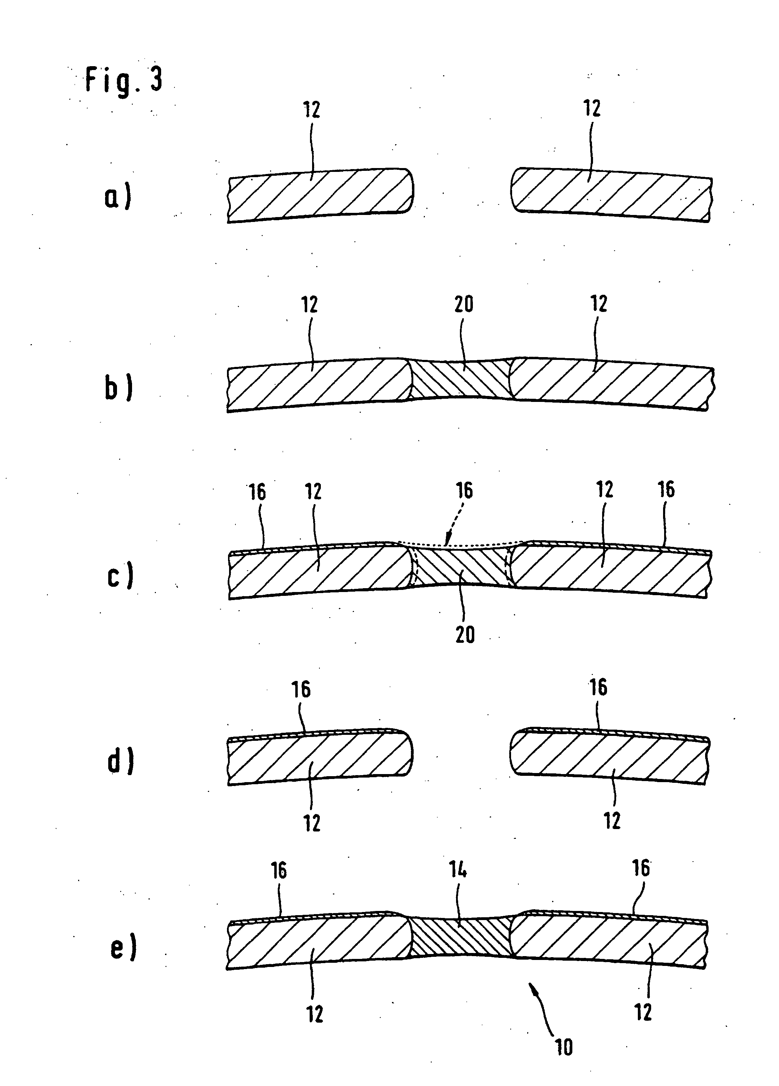

In Fig. 3 sind die einzelnen Schritte des erfindungsgemäßen Verfahrens anhand eines Ausführungsbeispiels näher dargestellt. Gemäß Fig. 3a wird die erste Komponente 12 bereitgestellt, die als Wandung mit einer Durchbrechung ausgebildet ist. In die Durchbrechung der ersten Komponente 12 wird die zweite Vorkomponente 20 mittels Spritzgießens eingebracht, wobei die zweite Vorkomponente 20 eine nicht dauerhafte, insbesondere leicht haftende Verbindung mit der ersten Komponente 12 eingeht. Anschließend wird die Beschichtung 16 . auf die erste Komponente 12 sowie gegebenenfalls auch auf die zweite Vorkomponente 20, wie durch den punktierten Pfeil 16 angedeutet ist, aufgebracht. Aus Fig. 3c ist deutlich sichtbar, daß die Kontaktbereiche zwischen der zweiten Vorkomponente 20 und der ersten Komponente 12 sicher abgedeckt sind und frei von der Beschichtung 16 gehalten werden.

In Fig. 3d ist die erste Komponente 12 mit der Beschichtung 16 an der Oberfläche nach Entfernen der zweiten Vorkomponente 20 dargestellt. Anschließend erfolgt die Einbringung der zweiten Komponente 14 in die Durchbrechung der ersten Komponente 12 mittels Spritzgießens, wobei die erste Komponente 12 und die zweite Komponente 14 eine dauerhafte Verbindung eingehen. Dieses Bewerkstelligen einer dauerhaften Verbindung wird im wesentlichen dadurch gewährleistet, daß die Kontaktflächen zwischen der zweiten Komponente 14 und der ersten Komponente 12 frei von der Beschichtung 16 sind. Da der Kontaktbereich zwischen zweiter Vorkomponente 20 und erster Komponente 12 bzw. zweiter Komponente 14 und erster Komponente 12 praktisch identisch sind, was mittels der Spritzgießform 18, 22 sehr gut eingestellt werden kann, werden auch beispielsweise Oberflächenfehler an den Übergangsstellen zwischen erster Komponente 12 und zweiter Komponente 14 sicher vermieden. Es bleibt zu erwähnen, daß die Darstellung der Fig. 3 eine Prinzipdarstellung ist und dementsprechend nicht maßstabsgetreu ist. Insbesondere ist die Dicke der Beschichtung 16 im Vergleich zu der Dicke der ersten bzw. zweiten Komponente 10, 14 vergrößert dargestellt.

Die Beschichtung 16 kann durch eine Metallisierung gebildet werden bzw. eine Metallisierung aufweisen, die beispielsweise galvanisch, chemisch-physikalisch oder mittels Lack oder Farbe oder dergleichen einer Oberfläche aufgebracht ist. Die zweite Vorkomponente 20 und die zweite Komponente 14 können hinsichtlich der geometrischen Abmessungen, wie Dicke, Form, Kontur im wesentlichen identisch sein, wie dies in den Ausführungsbeispielen der Figuren dargestellt ist. Dann bietet es sich an, daß auch die erste und zweite Spritzgießform 18, 22 identisch oder unter Berücksichtigung der Dicke der Beschichtung 16 der ersten Komponente 12 im wesentlichen identisch sind.

Es besteht jedoch auch die Möglichkeit, die zweite Vorkomponente 20 und die zweite Komponente 14 hinsichtlich der geometrischen Abmessungen, wie Dicke, Form, Kontur oder dergleichen unterschiedlich auszubilden. Beispielsweise können gemäß dem Ausführungsbeispiel der Fig. 1 die spätere Kontaktfläche zwischen Komponente 12 und Komponente 14 lediglich mit einer flächigen Schicht der zweiten Vorkomponente 20 bedeckt sein, die ebenfalls dafür sorgt, daß die spätere Kontaktfläche nicht mit der Beschichtung 16 beaufschlagt ist. Im Ausführungsbeispiel der Fig. 3, insbesondere Fig. 3c, könnte beispielsweise auch die zweite Vorkomponente lediglich als Schicht im Bereich der späteren Kontaktfläche zwischen der ersten und zweiten Komponente 12, 14 gemäß Fig. 3e ausgebildet sein, wie dies gestrichelt in Fig. 3c dargestellt ist. In diesem Fall versteht es sich, daß die Spritzgießformen 18, 22 unterschiedlich ausgebildet sind. Weiterhin bietet es sich an, daß die zweite Vorkomponente 20 mechanisch von der ersten Komponente 12 nach dem Anbringen der Beschichtung 16 auf der ersten Komponente 12 getrennt wird. Dieser mechanischen Trennung kann ein chemisches Anlösen vorangestellt werden. Auch kann in Betracht gezogen werden, die zweite Vorkomponente 20 chemisch völlig aufzulösen. Es versteht sich, daß der Kunststoff zur Bildung der zweiten Vorkomponente 20 und der zweiten Komponente 14 unterschiedliche Eigenschaften besitzen kann, mit denen unter Umständen die individuellen Hafteigenschaften an der ersten Komponente 12 passend eingestellt werden.

### Bezugszeichenliste

- 10: Spritzgießteil
- 12: 1. Komponente
- 14: 2. Komponente
- 16: Beschichtung
- 18: Spritzgießform
- 20: 2. Vorkomponente
- 22: 2. Spritzgießform
- 24: Formhälfte
- 26: Formhälfte
- 28: Kavität
- 30: Beschichtungsvorrichtung

## Patentansprüche

1. Verfahren zur Herstellung eines Kunststoffteils, insbesondere Spritzgießteil (10), bestehend wenigstens aus einer ersten Komponente (12) und mit dieser verbundenen zweiten Komponente (14) aus jeweils gegebenenfalls unterschiedlichen Kunststoffen, wobei die erste Komponente (12) eine Beschichtung (16) einer Oberfläche aufweist und die zweite Komponente (14) bevorzugt jedenfalls diese Beschichtung (16) einer Oberfläche nicht aufweist mit den Schritten:
das Kunststoffteil, insbesondere Spritzgießteil (10), wird in einer ersten Form, insbesondere Spritzgießform (18), insbesondere Mehrkompbnenten-Spritzgießform, durch Formen, insbesondere Spritzgießen hergestellt, wobei die Verbindung. zwischen der ersten Komponente (12) und einer zweiten Vorkomponente (20) nicht dauerhaft, insbesondere nur leicht haftend, eingestellt ist;
eine Oberfläche der ersten Komponente (12) und/oder zweiten Vorkomponente (20) des Kunststoffteils, insbesondere Spritzgießteil (10), wird mit der Beschichtung (16) versehen;
die zweite Vorkomponente (20) wird von der ersten Komponente (12) getrennt und entfernt;
die zweite Komponente (14) wird in einer zweiten Form, insbesondere Spritzgießform (22), insbesondere Mehrkomponenten-Spritzgießform, durch Formen, insbesondere Spritzgießen, dauerhaft mit der ersten Komponente (12) verbunden.

2. Verfahren nach Anspruch 1, **dadurch gekennzeichnet, daß** die Beschichtung (16) eine Metallisierung aufweist, die insbesondere galvanisch, chemisch-physikalisch oder mittels Lack oder Farbe oder dergleichen einer Oberfläche aufgebracht ist.

3. Verfahren nach einem der Ansprüche 1 oder 2, **dadurch gekennzeichnet, daß** die zweite Vorkomponente (20) und die zweite Komponente (14) hinsichtlich der geometrischen Abmessungen, wie Dicke, Form, Kontur oder dergleichen im wesentlichen identisch sind.

4. Verfahren nach einem der vorhergehenden Ansprüche, **dadurch gekennzeichnet, daß** die erste und zweite Form, insbesondere Spritzgießform (18, 22), identisch oder unter Berücksichtigung der Dicke der Beschichtung (16) der ersten Komponente (12) im wesentlichen identisch sind.

5. Verfahren nach einem der Ansprüche 1 oder 2, **dadurch gekennzeichnet, daß** die zweite Vorkomponente (20) und die zweite Komponente (14) hinsichtlich der geometrischen Abmessungen, wie Dicke, Form, Kontur oder dergleichen unterschiedlich ausgebildet sind.

6. Verfahren nach Anspruch 5, **dadurch gekennzeichnet, daß** die erste und zweite Form, insbesondere Spritzgußform (18, 22), unterschiedlich ausgebildet sind.

7. Verfahren nach einem der vorhergehenden Ansprüche, **dadurch gekennzeichnet, daß** die zweite Vorkomponente (20) mechanisch von der ersten Komponente (12) getrennt oder chemisch angelöst bzw. aufgelöst wird.

8. Verfahren nach einem der vorhergehenden Ansprüche, **dadurch gekennzeichnet, daß** der Kunststoff zur Bildung der zweiten Vorkomponente (20) und zweiten Komponente (14) unterschiedliche Eigenschaften besitzt.

## Claims

1. A method for producing a plastic part, in particular an injection-molded part (10), comprised of at least a first component (12) and a second component (14) connected thereto, each of said components being of different plastics as the case may be, said first component (12) having a coating (16) of an upper face, and said second component (14) preferably not having in any event said coating (16) of an upper face, comprising the steps of:
producing the plastic part, in particular the injection-molded part (10), in a first mold, in particular an injection mold (18), in particular a multi-component injection mold, by molding, in particular injection-molding, whereby the connection between the first component (12) and a preliminary second component (20) is not made permanent, in particular only adhering slightly;
providing an upper face of the first component (12) and/or of the preliminary second component (20) of the plastic part, in particular the injection-molded part (10), with the coating (16);
separating and removing the preliminary second component (20) from the first component (12);
permanently connecting the second component (14) to the first component (12) in a second mold, in particular an injection mold (22), in particular a multi-component injection mold, by molding, in particular injection-molding.

2. The method as claimed claim 1, **characterized in that** the coating (16) includes a metallization, which is applied in particular by electroplating, chemically-physically, or by means of paint or varnish or the like, to an upper face.

3. The method as claimed in any one of the claims 1 or 2, **characterized in that** the preliminary second component (20) and the second component (14) are essentially identical with regard to the geometrical dimensions, such as thickness, shape, contour or the like.

4. The method as claimed in any one of the preceding claims, **characterized in that** the first and second molds, in particular injection molds (18, 22), are identical or, taking into consideration the thickness of the coating (16) applied to the first component (12), essentially identical.

5. The method as claimed in any one of the claims 1 or 2, **characterized in that** the preliminary second component (20) and the second component (14) are designed differently with regard to the geometrical dimensions, such as thickness, shape, contour or the like.

6. The method as claimed in claim 5, **characterized in that** the first and second molds, in particular injection molds (18, 22), are differently designed.

7. The method as claimed in any one of the preceding claims, **characterized in that** the preliminary second component (20) is separated from the first component (12) mechanically or is chemically dissolved incipiently or is chemically dissolved completely.

8. The method as claimed in any one of the preceding claims, **characterized in that** the plastic for forming the preliminary second component (20) and the second component (14) has different properties.

## Revendications

1. Procédé de fabrication d'une pièce en matière plastique, notamment d'une pièce moulée par injection (10) constituée d'au moins une première composante (12) et d'une seconde composante (14) reliée à cette dernière, le cas échéant en matières plastiques respectivement différentes, la première composante (12) étant munie d'un revêtement (16) d'une surface et la seconde composante (14) n'étant pas munie de préférence dans tous les cas dudit revêtement (16) d'une surface, comprenant les étapes suivantes :
la pièce en matière plastique, notamment la pièce moulée par injection (10) est fabriquée dans un premier moule, notamment un moule à injection (18), notamment un moule à injection multi-composantes, par moulage, notamment par moulage par injection, la liaison entre la première composante (12) et une seconde composante (20) étant réglée de façon non durable, notamment uniquement par légère adhérence ;
une surface de la première composante (12) et/ou de la seconde composante préliminaire (20) de la pièce en matière plastique, notamment une pièce moulée par injection (10) est munie du revêtement (16 ;
la seconde composante préliminaire (20) est séparée et éloignée de la première composante (12) ;
dans un second moule, notamment un moule à injection (22), notamment un moule à injection multi-composantes, la seconde composante (14) est reliée de façon durable avec la première composante (12) par moulage, notamment par moulage par injection.

2. Procédé selon la revendication 1, **caractérisé en ce que** le revêtement (16) est muni d'une métallisation, appliquée notamment par processus de galvanisation, physico-chimique ou à l'aide de vernis ou de peinture ou similaire sur une surface.

3. Procédé selon l'une quelconque des revendications 1 ou 2, **caractérisé en ce que** la seconde composante préliminaire (20) et la seconde composante (14) sont sensiblement identiques au niveau des dimensions géométriques, telles que l'épaisseur, la forme, le contour ou similaires.

4. Procédé selon l'une quelconque des revendications précédentes, **caractérisé en ce que** le premier et le second moule, notamment des moules à injection (18, 22) sont identiques ou sensiblement identiques, sous considération de l'épaisseur du revêtement (16) de la première composante (12).

5. Procédé selon l'une quelconque des revendications 1 ou 2, **caractérisé en ce que** la seconde composante préliminaire (20) et la seconde composante (14) sont conçues de façon différente au niveau des dimensions géométriques, telles que l'épaisseur, la forme, le contour ou similaires.

6. Procédé selon la revendication 5, **caractérisé en ce que** le premier et le second moule, notamment des moules à injections (18, 22) sont conçus de façon différente.

7. Procédé selon l'une quelconque des revendications précédentes, **caractérisé en ce que** la seconde composante préliminaire (20) est séparée de façon mécanique de la première composante (12) ou mordancée ou dissoute par voie chimique.

8. Procédé selon l'une quelconque des revendications précédentes, **caractérisé en ce que** le matière plastique pour la création de la seconde composante préliminaire (20) et de la seconde composante (14) possède des caractéristiques différentes.
